# EUROPEAN PATENT SPECIFICATION

(11) **EP 3 438 507 B1**
(45) Date of publication and mention of the grant of the patent: **27.10.2021**
(21) Application number: 18185964.6
(22) Date of filing: 27.07.2018
(51) Int. Cl.: F16H 27/04, B23Q 7/04, H05K 13/04, F16H 37/16, B23Q 3/155

(54) **CAM MANIPULATOR, ESPECIALLY FOR AUTOMATIC TOOL CHANGE ON A MACHINE TOOL**
NOCKENMANIPULATOR, INSBESONDERE FÜR AUTOMATISCHEN WERKZEUGWECHSEL AN EINER WERKZEUGMASCHINE
MANIPULATEUR À CAMES, EN PARTICULIER DE CHANGEMENT AUTOMATIQUE D'OUTILS SUR UNE MACHINE-OUTIL

(30) Priority: 01.08.2017 CZ 20170439
(43) Date of publication of application: 06.02.2019
(73) Proprietor: VÚTS, a.s., Liberec XI - Ruzodol I 460 01 Liberec (CZ)
(72) Inventor: Richter, Ales, 460 15 Liberec, Liberec XV-Stary Harcov (CZ); Tomas, Vaclav, 293 01 Mlada Boleslav, Mlada Boleslav III (CZ)
(74) Representative: Musil, Dobroslav

(56) References cited:
- EP-A1- 1 300 609
- JP-U- S63 121 852
- US-A- 5 337 623
- US-A1- 2002 035 881
- US-A1- 2005 061 091

## Description

### Technical field

The invention relates to a cam manipulator, especially for automatic tool change on a machine tool, which comprises a gripper with at least one gripping arm which terminates in a clamp, the gripper being coupled to a motion mechanism which is coupled to a drive, a control device and a power source, the gripper is mounted reversibly slidably on a bearing mandrel and with the gripper is coupled a linear carrier, whereby on the carrier is mounted by its first end a control lever, which is by its other end mounted reversibly swingingly about the transverse axis in the manipulator structure, while the control lever is in the area between its both ends coupled to a control cam.

### Background art

A great variety of manipulators are used in industry.

Particularly for automatic machine tools, machining centers, etc., tool magazines are used, which are assigned to a particular machine and are intended to perform work operations on this machine. From the magazine, tools for individual operations are delivered to a working body of the machine by means of various manipulators.

Known are manipulators in the form of robotic arms which search the respective tool in a magazine, grasp it and transfer it to the working body of the machine. These manipulators are very versatile, but they are also complicated, expensive, and the time needed for tool change is relatively long. Also, the possible weight of the tool being delivered to which such a universal manipulator is to be dimensioned must be significantly reduced.

Another well-known type of manipulators is represented by single-purpose mechanisms, which comprise groups of elements, including cams and drives, in a variety of arrangements. Such manipulators are suitable for the type of machines for which they are designed. They are relatively simple, but in long-term operation they exhibit only a limited reliability and accuracy.

From US 2005/0061091 is known a cam device which uses a stepper gearbox with a globoid cam and a set of pulleys at the periphery of the shifted shaft. The globoid cam itself is an extremely demanding component for which special production equipment is required. The stepper gearbox with a globoid cam is thus relatively expensive, maintenance-demanding and for ideal operation it is important to bias the rollers to limit their clearance in the groove of the globoid cam. In addition, when the shaft (mandrel) with the tool gripper is shifted and rotated, the pulley plate also shifts increasing the load and worsening the dynamics of the shifting part of the manipulator, and the pulleys must move tangentially in the groove of the globoid cam. In addition, a radial cam situated directly on the globoid cam is used to control the shifting of the shaft (mandrel) with the tool holder (gripper), which further makes the whole solution complex and expensive. The entire arrangement is thus expensive and demanding to manufacture and operate. In addition, the carrier of the gripper is rotatable together with the shaft (mandrel) and is coupled to the control arm by means of a circumferential groove. The gripper is axially displaceable and rotatable on the support mandrel, and the support mandrel is fixed.

The aim of the invention is therefore to provide a manipulator which would allow automatic tool change without an operator, performed in a short time and with a high degree of reliability even in long-term operation.

### Principle of the invention

The goal of the invention is achieved by a cam manipulator, especially for automatic tool change on a machine tool, whose principle consists in that the bearing mandrel is mounted reversibly rotatably about its longitudinal axis in the manipulator structure, whereby the linear carrier is with respect to both the gripper and the bearing mandrel rotatable about the longitudinal axis of the bearing mandrel. The control cam is created by axial cam, which is non-rotatably mounted on a main shaft of the manipulator, whereby the bearing mandrel and the main shaft are coupled together by means of a stepper gearbox with a carousel comprising discs, between which pins are arranged on a common pitch diameter and at determined angular spacings, whereby to the pins is associated a control surface of at least one stepping radial cam and the main shaft is coupled to a drive of the manipulator.

This solution makes it possible to propose a manipulator with an ideal lift characteristic, when the work cycle of the manipulator is accurately controlled by a servo-drive, the whole cycle taking place during a single revolution of the main shaft or of the output shaft of the servo-drive or of its gearbox. The duration of the work cycle is typically in units of seconds, e.g., 2 seconds, whereby the particular design of the manipulator according to the invention, including the dimensional and performance parameters, etc., is suitable for handling two tools with an ISO 50 shank, with a weight of each tool of up to 25 kg, with a heeling moment of each tool of up to 50 Nm. The total weight of the manipulator assembly, including the tools being manipulated, is approximately 260 kg.

### Description of drawings

The invention is schematically represented in the drawing, where Fig. 1 shows the initial position of all the elements of the manipulator, Fig. 2 shows the state after the start of the turning of the main shaft with the gripper having been linearly displaced, Fig. 3 shows the state with the gripper being fully ejected and before the start of the engagement of the stepper gearbox, Fig. 4 illustrates the state with the gripper fully ejected and after the start of the engagement of the stepper gearbox, with the bearing mandrel having been slightly turned, Fig. 5 shows the state with the gripper being fully ejected and with the bearing mandrel having made a full turn, Fig. 6 represents the state of returning the gripper to the rear position on the bearing mandrel, which has made a full turn, and finally, Fig. 7 shows the state after returning the gripper to the rear position on the bearing mandrel, which has made a full turn.

### Examples of embodiment

A cam manipulator, especially for automatic tool change on a machine tool, (hereinafter the manipulator) is one of the individual parts of the machine for automatic tool change, in particular it relates to changing a tool from a headstock of the machine tool for another tool from a magazine tool.

The manipulator comprises a tool gripper **1,** which is provided with a pair of mutually perpendicular gripping arms **10, 11,** which terminate in clamps **100, 110** for grasping a tool. The gripping arms **10, 11** and their clamps **100, 110** are arranged in a common plane **R,** whereby the longitudinal axes **1000, 1100** of the tools gripped in the clamps **100, 110** are parallel to each other and perpendicular to the common plane **R** of the gripping arms **10, 11** and their clamps **100, 110.**

The gripper **1** is mounted reversibly slidably in a perpendicular direction to the common plane **R** of the gripping arms **10, 11** on a bearing mandrel **2,** which is mounted reversibly rotatably about its longitudinal axis **22** in the manipulator structure. In the exemplary embodiment shown, the bearing mandrel **2** comprises a central shaft **20,** which is longitudinally provided with at least one linear guide **21** constituting a longitudinal guide rail for at least one linear guide element **12** mounted on the gripper **1** perpendicularly to the common plane **R** of the gripping arms **10, 11** and their clamps **100, 110.** In the examplary embodiment shown, the central shaft **20** is longitudinally provided with a pair of opposing linear guides **21** for a pair of opposing linear guide elements **12** mounted on the gripper **1.**

A linear carrier **6** is coupled to the gripper **1,** whereby the linear carrier **6** is rotatable relative to the gripper **1** about the longitudinal axis **22** of the bearing mandrel **2** and at the same the carrier **6** is rotatable about this longitudinal axis **22** of the bearing mandrel **2** also with respect to the bearing mandrel **2.** A control lever **3** is mounted by its first end **31** on the carrier **6,** the control lever **3** being mounted, as will be described in more detail further on, by its other end **30** reversibly swingingly about the transverse axis in the manipulator structure. In the area between both its ends **30, 31** the control lever **3** is further coupled to a control axial cam **4,** which is non-rotatably mounted on the main shaft **5** of the manipulator, as will be described hereinafter. Thus, the control lever **3** controls the reversible linear slidable motion of the gripper **1,** which is controlled by the rotating control axial cam **4** on the main shaft **5** of the manipulator.

In the exemplary embodiment shown, the control axial cam **4** includes a guide groove **40,** in which fits a guide pulley **32** on the control lever **3**.

Furthermore, a carousel **7** of the stepper gearbox is mounted on the bearing mandrel **2.** The carousel **7** of the stepper gearbox comprises at least two discs **70,** rotatably mounted on the bearing mandrel **2,** between which are disposed pins **71** on a common pitch diameter and at determined angular spacings, according to the desired size of the step of the gearbox. During the operation of the gearbox (of the manipulator), the control surface **80** of at least one stepper radial cam **8,** which is non-rotatably mounted on the main shaft **5** of the manipulator engages with the pins **71,** which results in the stepwise rotation of the bearing mandrel **2,** i.e. the continuous rotary motion of the main shaft **5** is transformed into an intermittent rotary motion of the bearing mandrel with defined angles of the bearing mandrel **2** rotation at each step.

In the illustrated exemplary embodiment, the stepper gearbox comprises a pair of stepper radial cams **8,** arranged next to each other, but spaced apart, which means that it comprises the so-called twin cam, the pair being associated with a double carousel **7** with three discs **70,** between which two sets of pins **71** are arranged. This arrangement is advantageous for providing a defined and stable rest position (the bearing mandrel **2** is not rotating here) between the individual rotations of the bearing mandrel **2.**

Clearly, in an unillustrated embodiment, the carousel **7** is mounted on the main shaft **5** and the stepper radial cams **8** are mounted on the bearing mandrel **2.**

The main shaft **5** is coupled to an unillustrated output shaft of the servo-drive, which is connected to an unillustrated control device and to a power source for its operation. The servo-drive is capable of rotating its output shaft in both directions. If it is necessary to adjust the speed of the motion of the output shaft of the servodrive, a servo-drive with an output gearbox whose output shaft is coupled to the main shaft **5** of the manipulator is selected as the manipulator drive.

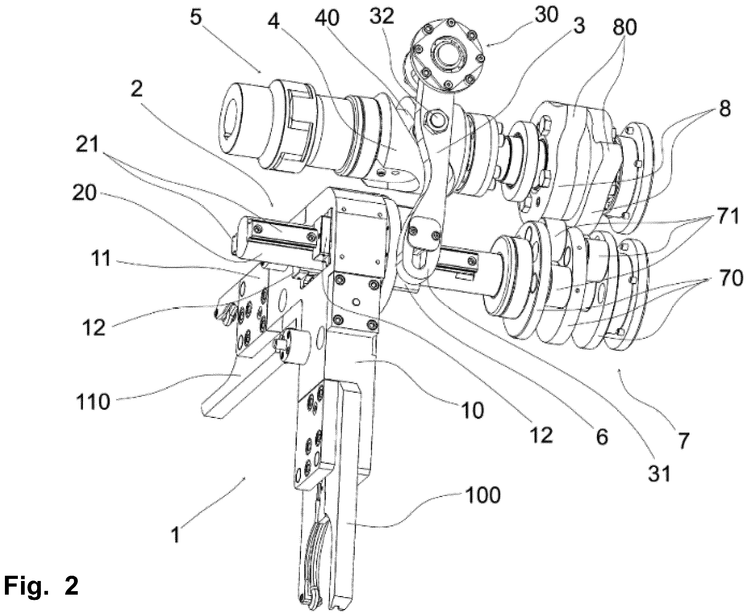

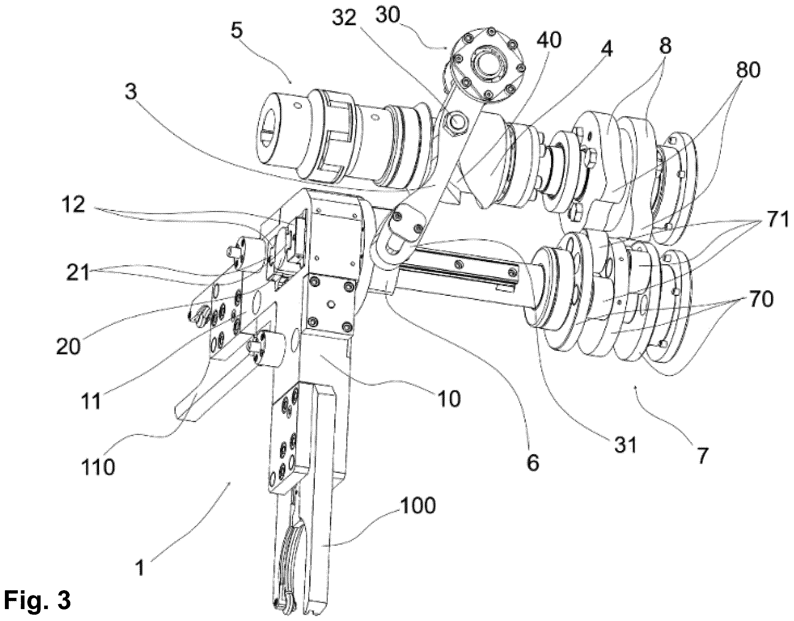

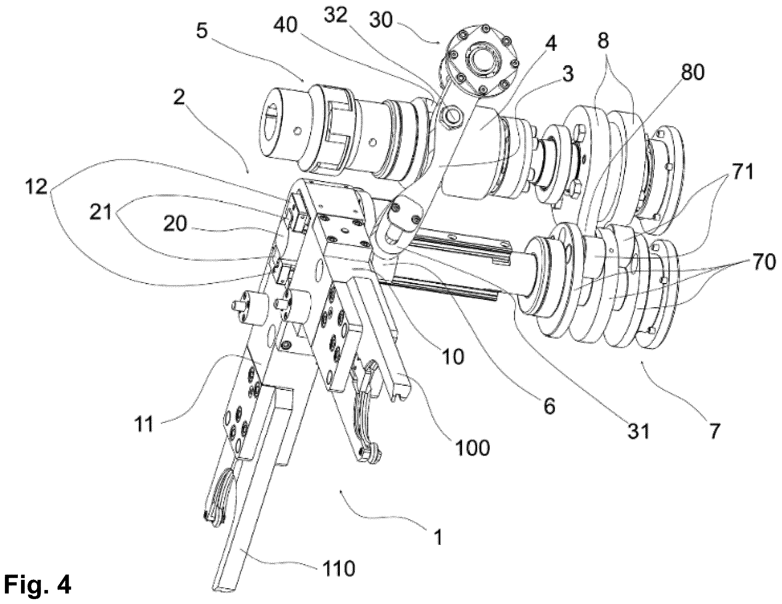

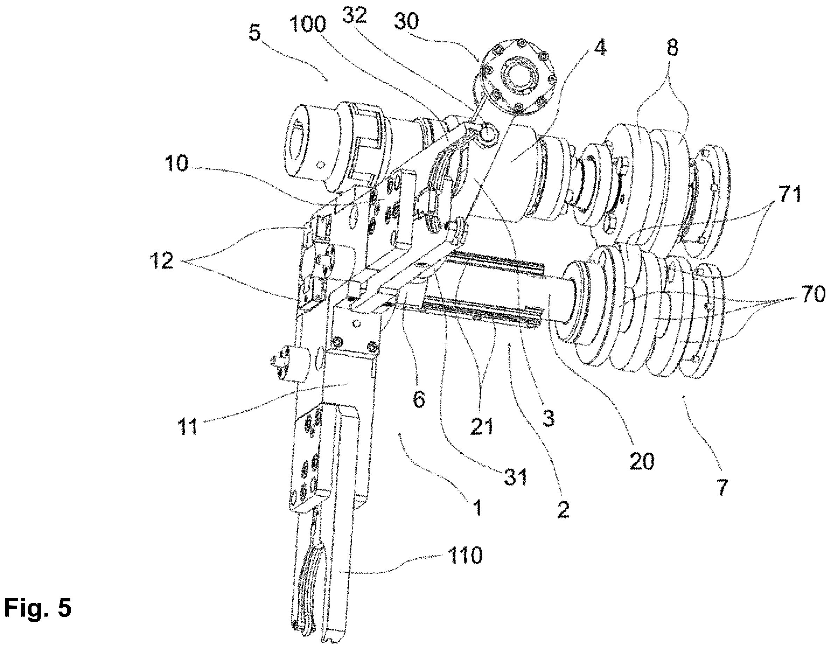

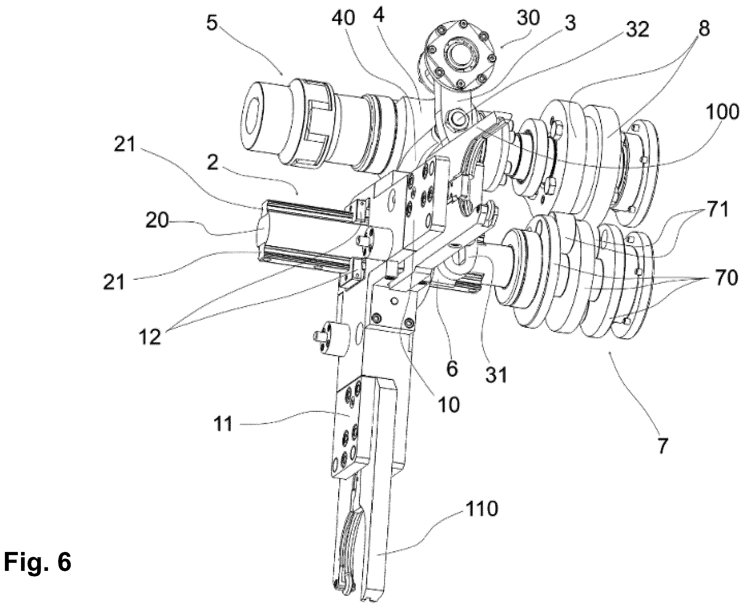

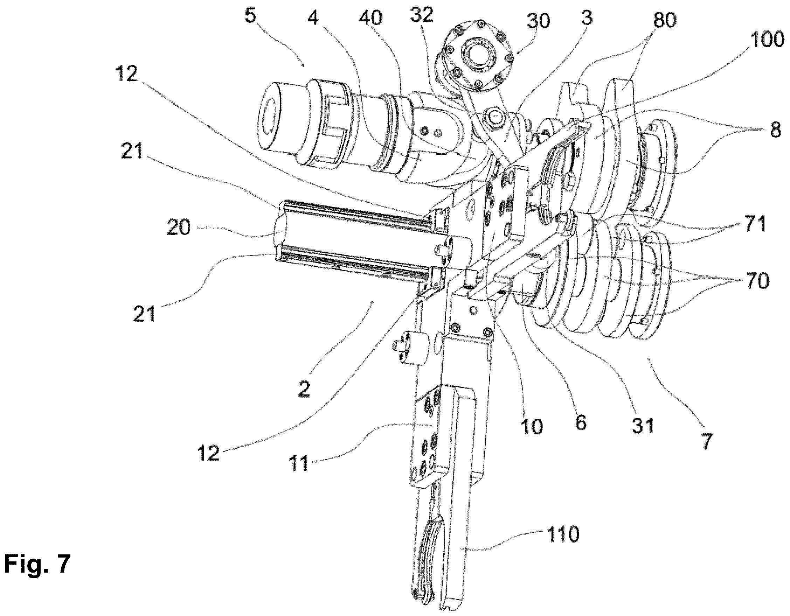

The manipulator operates in such a way that one step of manipulation is performed during one revolution of the output shaft of the servo-drive (or of the output shaft of the output gearbox of the servo-drive), when one revolution of the main shaft **5** of the manipulator is performed and within this single revolution of the main shaft **5** of the manipulator, due to the control axial cam **4** acting on the control lever **3** of the carrier **6** the gripper **1** is at first ejected to the front position, see Figs. 2 and 3, whereupon the control surface **80** of at least one stepper radial cam **8** starts to act on the pins **71** of the carousel **7** of the stepper gearbox, see Fig. 4, thereby turning the carousel **7** and, along with it, also the bearing mandrel **2** and the gripper **1** about the longitudinal axis **22** of the bearing mandrel **2** by the desired angle, e.g. 90°, see Fig. 5. After this turning of the gripper **1,** during the next revolution of the main shaft **5**, the control axial cam **4**, acts on the control lever **3** of the carrier **6** in the opposite direction, thereby causing the turned gripper **1** to retract back, see Fig. 6 and 7. The bearing mandrel **2** remains in a slightly turned position, as shown in Fig. 7. In the next step, the output shaft of the servo-drive (or the output shaft of the output gearbox of the servo-drive) turns one revolution back, as well as the entire mechanism of the manipulator.

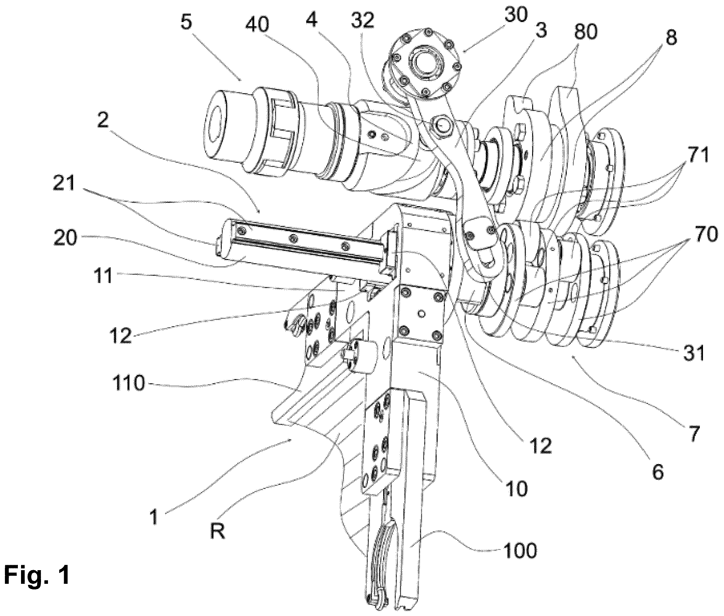

The second manipulation step is again carried out during one revolution of the output shaft of the servo-drive (or of the output shaft of the output gearbox of the servo-drive) except that the output shaft of the servo-drive (or the output shaft of the output gearbox of the servo-drive) makes one revolution in the opposite direction, whereby within this single counter revolution of the main shaft **5** of the manipulator due to the control axial cam 4 acting on the control lever 3 of the carrier 6, at first the gripper **1** is ejected gradually to the front position, see the position in the figures - first in Fig.6 and then in Fig. 5. whereupon the control surface **80** of at least one stepper radial cam **8** starts acting from the opposite side on the pins **71** of the carousel **7** of the stepper gearbox, see Fig. 5, thereby rotating the carousel **7** and, along with it, rotating also the bearing mandrel **2** and the gripper **1** about the longitudinal axis **22** of the bearing mandrel **2** by the desired angle, e.g. 90 °, as is illustrated first in Fig. 4 and then in Fig. 3. After this turning of the gripper **1**, during the next revolution of the main shaft **5**, the control axial cam **4**, acts on the control lever **3** of the carrier **6** in the opposite direction, thereby causing the turned gripper **1** to retract back, as is shown first in Fig. 2 and then in Fig. 1. The bearing mandrel **2** is now in its initial position before the start of the first step.

In an unillustrated exemplary embodiment, the gripper **1** is provided with only one gripping arm **10** which terminates in a clamp **100,** to which the working cycle and rhythm of the manipulator is adapted.

Thus, by means of the pair of clamps **100, 110** of the gripping arms **10**, **11** of the gripper **1,** the manipulator according to the present invention creates a total of three manipulation positions of the clamps **100, 110,** whereby in the individual positions of the bearing mandrel 2 being slightly turned, the middle position is adopted by both clamps **100, 110,** which is a position corresponding to the gripper in the spindle of the machine tool being operated. The extreme positions of each of the pair of the clamps then correspond to the positions in which the tool magazine output is assigned to the manipulator.

### Industrial applicability

The invention is applicable particularly in engineering for automatic tool change of machine tools.

## Claims

1. A cam manipulator, especially for automatic tool change on a machine tool, comprising a gripper (1) with at least one gripping arm (10, 11) which terminates in a clamp (100, 110), whereby the gripper (1) is coupled to a motion mechanism, which is coupled to a drive, a control device and a power source, the gripper (1) is mounted reversibly slidably on a bearing mandrel (2) and with the gripper (1) is coupled a linear carrier (6), whereby on the carrier (6) is mounted by its first end (31) a control lever (3), which is by its other end (30) mounted reversibly swingingly about the transverse axis in the manipulator structure, while the control lever (3) is in the area between its both ends (30, 31) coupled to a control cam, **characterized in that** the bearing mandrel (2) is mounted reversibly rotatably about its longitudinal axis (22) in the manipulator structure, whereby the linear carrier (6) is with respect to both the gripper (1) and the bearing mandrel (2) rotatable about the longitudinal axis (22) of the bearing mandrel (2), whereby the control cam is created by axial cam (4), which is non-rotatably mounted on a main shaft (5) of the manipulator, whereby the bearing mandrel (2) and the main shaft (5) are coupled together by means of a stepper gearbox with a carousel (7) comprising discs (70), between which pins (71) are arranged on a common pitch diameter and at determined angular spacings, whereby to the pins (71) is associated a control surface (80) of at least one stepping radial cam (8) and the main shaft (5) is coupled to the manipulator drive.

2. The cam manipulator according to claim 1, **characterized in that** the carousel (7) is mounted on the bearing mandrel (2) and the stepper cam (8) is mounted on the main shaft (5).

3. The cam manipulator according to claim 1 or 2, **characterized in that** the carousel (7) comprises three discs (70), between which are disposed two sets of pins (71), with which are associated two stepper radial cams (8), arranged next to each other, but spaced apart.

4. The cam manipulator according to any of claims 1 to 3, **characterized in that** the bearing mandrel (2) comprises a central shaft (20), which is longitudinally provided with at least one linear guide (21) for at least one guide element (12) on the gripper (1).

5. The cam manipulator according to claim 4, **characterized in that** the central shaft (20) is longitudinally provided with a pair of opposing linear guides (21) for a pair of opposing linear guide elements (12) mounted on the gripper (1).

6. The cam manipulator according to any of claims 1 to 5, **characterized in that** the control axial cam (4) comprises a guide groove (40), in which fits a guide pulley (32) on the control lever (3).

## Patentansprüche

1. Nockenmanipulator, insbesondere für automatischen Werkzeugwechsel an einer Werkzeugmaschine, der einen Greifer (1) mit mindestens einem Greifarm (10, 11) aufweist, der mit einem Fänger (100, 110) beendet ist, wobei der Greifer (1) mit einer Bewegungsvorrichtung verkoppelt ist, die mit Antrieb, Steuereinrichtung und Energiequelle verkoppelt ist, der Greifer (1) auf einem Tragdorn (2) umkehrbar gleitend gelagert ist und mit dem Greifer (1) ein linearer Träger (6) verkoppelt ist, wobei auf dem Träger (6) mit seinem ersten Ende (31) ein Steuerhebel (3) gelagert ist, der mit seinem anderen Ende (30) um die Querachse herum umkehrbar schwenkbar in der Konstruktion des Manipulators gelagert ist, wobei er im Bereich zwischen beiden seiner Enden (30, 31) mit einem Steuernocken verkoppelt ist, **dadurch gekennzeichnet, dass** der Tragdorn (2) um seine Längsachse (22) herum umkehrbar drehbar in der Konstruktion des Manipulators gelagert ist und der lineare Träger (6) dem Greifer (1) sowie dem Tragdorn (2) gegenüber um die Längsachse (22) des Tragdorns (2) herum drehbar ist, wobei der Steuernocken des Steuerhebels (3) durch einen Axialnocken (4) gebildet wird, der auf der Hauptwelle (5) des Manipulators nicht drehbar gelagert ist, wobei der Tragdorn (2) und die Hauptwelle (5) durch ein Schrittgetriebe mit einem Karussell (7) verkoppelt sind, das die Scheiben (70) aufweist, zwischen denen auf einem gemeinsamen Teilkreisdurchmesser und in den bestimmten Winkelabständen die Bolzen (71) gelagert sind, denen eine Steuerfläche (80) von mindestens einem radialen Schrittnocken (8) zugeordnet ist und die Hauptwelle (5) mit dem Antrieb des Manipulators verkoppelt ist.

2. Nockenmanipulator nach dem Anspruch 1, **dadurch gekennzeichnet, dass** das Karussell (7) auf dem Tragdorn (2) gelagert ist und der Schrittnocken (8) auf der Hauptwelle (5) gelagert ist.

3. Nockenmanipulator nach dem Anspruch 1 oder 2, **dadurch gekennzeichnet, dass** das Karussell (7) drei Scheiben (70) aufweist, zwischen denen zwei Systeme von Bolzen (71) angeordnet sind, denen zwei nebeneinander beabstandet angeordnete radiale Schrittnocken (8) zugeordnet sind.

4. Nockenmanipulator nach einem der Ansprüche 1 bis 3, **dadurch gekennzeichnet, dass** der Tragdorn (2) eine Mittelwelle (20) aufweist, die längs mindestens einen linearen Führer (21) für mindestens ein lineares Führungselement (12) auf dem Greifer (1) aufweist.

5. Nockenmanipulator nach dem Anspruch 4, **dadurch gekennzeichnet, dass** die Mittelwelle (20) längs ein Paar von gegenüberliegenden linearen Führern (21) für ein Paar von gegenüberliegenden linearen Führungselementen (12) aufweist, die auf dem Greifer (1) gelagert sind.

6. Nockenmanipulator nach einem der Ansprüche 1 bis 5, **dadurch gekennzeichnet, dass** der axiale Steuernocken (4) eine Führungsnut (40) aufweist, in die die Führungsrolle (32) auf dem Steuerhebel (3) einrastet.

## Revendications

1. Manipulateur à came, particulièrement pour le changement automatique d'outils sur une machine-outil, muni d'une pince (1) avec au moins un bras de préhension (10, 11) avec un dispositif de préhension (100, 110) au bout, tandis que la pince (1) est attelée au dispositif de mouvement qui est attelé à l'entraînement, au dispositif de commande et à la source d'énergie, la pince (1) est montée de manière réversible et mobile sur un mandrin porteur (2) et un entraîneur linéaire (6) est attelé à la pince (1), tandis que sur l'entraîneur (6) est monté, avec sa première extrémité (31), un levier de commande (3) qui est, avec sa deuxième extrémité (30), monté de manière réversible et oscillante autour d'un axe transversal dans la structure du manipulateur, et dans l'espace entre ces deux extrémités (30, 31) attelé à la came de commande, **caractérisé en ce que** le mandrin porteur (2) et monté, de manière réversible et pivotante, autour de son axe longitudinal (22) dans la structure du manipulateur, et l'entraîneur linéaire (6) peut pivoter autour de l'axe longitudinal (22) du mandrin porteur (2) par rapport à la pince (1) et au mandrin porteur (2), tandis que la came de commande du levier de commande (3) est formée par une came axiale (4) qui est montée de manière non-pivotante sur l'arbre principal (5) du manipulateur, tandis que le mandrin porteur (2) et l'arbre principal (5) sont attelés par un mécanisme de transmission pas à pas avec un tour vertical (7) qui comprend des disques (70) entre lesquels sont disposés, sur un diamètre primitif commun et à des distances angulaires définies, des chevilles (71) auxquelles est associée une surface de commande (80) d'au moins une came radiale étagée (8), et l'arbre principal (5) est attelé à l'entraînement du manipulateur.

2. Manipulateur à came selon la revendication 1, **caractérisé en ce que** le tour vertical (7) est monté sur le mandrin porteur (2) et la came étagée (8) est montée sur l'arbre principal (5).

3. Manipulateur à came selon la revendication 1 ou 2, **caractérisé en ce que** le tour vertical (7) comprend trois disques (70) entre lesquels sont disposés deux jeux de chevilles (71) auxquelles sont associées deux cames radiales étagées (8) et espacées côte à côte.

4. Manipulateur à came selon l'une des revendications 1 à 3, **caractérisé en ce que** le mandrin porteur (2) comprend un arbre central (20) qui est, sur le plan longitudinal, pourvu d'au moins un conducteur linéaire (21) pour au moins un élément de guidage linéaire (12) sur la pince (1).

5. Manipulateur à came selon la revendication 4, **caractérisé en ce que** l'arbre central (20) est, sur le plan longitudinal, pourvu d'une paire de conducteurs linéaires opposés (21) pour une paire d'éléments de guidage linéaires opposés (12) et montés sur la pince (1).

6. Manipulateur à came selon l'une des revendications 1 à 5, **caractérisé en ce que** la came axiale de commande (4) comprend une rainure de guidage (40) dans laquelle rentre la poulie de guidage (32) sur le levier de commande (3).
